# EUROPEAN PATENT APPLICATION

(11) **EP 3 617 896 A1**
(43) Date of publication of application: **04.03.2020**
(21) Application number: 18900573.9
(22) Date of filing: 22.08.2018
(51) Int. Cl.: G06F 16/00, G06F 16/9032

(54) **METHOD AND APPARATUS FOR INTELLIGENT RESPONSE**

(30) Priority: 04.07.2018 CN 201810726621
(71) Applicant: Wangsu Science & Technology Co., Ltd., Shanghai 200030 (CN)
(72) Inventor: LIU, Zhiwen, Xuhui District Shanghai 200030 (CH)
(74) Representative: Hanna Moore + Curley
(86) International application number: PCT/CN2018/101749
(87) International publication number: WO 2020/006827

(57) **Abstract**

An intelligent response method includes: periodically training a response model in a response model library based on a response record and a preset information collection; when receiving conversation data sent by a client terminal, determining and invoking a target response model in the response model library; and generating a response message for the conversation data by using the target response model, feeding back the response message to the client terminal, and adding the conversation data and the response message to the response record.

## Description

### FIELD OF DISCLOSURE

The present disclosure generally relates to the field of artificial intelligence technology and, more particularly, relates to an intelligent response method and device.

### BACKGROUND

With the development of artificial intelligence and the continuous maturation of machine learning, the machine learning technology originally in the academic research stage has now become more and more practical, and has been gradually applied to various real work and life scenarios. Under the evolution of this trend, many cumbersome, repetitive human jobs will gradually be replaced by intelligent machines/systems.

Intelligent response is a method of solving cumbersome question and response tasks by replacing some of the labor cost through artificial intelligence and machine learning. At present, the intelligent response is widely used in a large number of fields, such as enterprise customer service, chat and entertainment, call reply, etc., which greatly reduces labor cost and brings convenience to users. However, the overall effectiveness of the current intelligent response systems is far from expected, often requiring too much human intervention and requiring manually collecting data for model training, which lead these systems really far from meeting the needs of intelligent response in various fields. Therefore, there is an urgent need for an intelligent response method that can learn independently and respond accurately without requiring too much human intervention.

### BRIEF SUMMARY OF THE DISCLOSURE

To solve the problems in the existing technologies, the embodiments of the present disclosure provide an intelligent response method and device. The technical solutions are as follows:
In one aspect, an intelligent response method is provided. The method includes:
periodically training a response model in a response model library based on a response record and a preset information collection;
when receiving conversation data sent by a client terminal, determining and invoking a target response model in the response model library; and
generating a response message for the conversation data by using the target response model, feeding back the response message to the client terminal, and adding the conversation data and the response message to the response record.

Optionally, periodically training the response model in the response model library based on the response record and the preset information collection includes:
periodically extracting, from the response record, question and response group data, and extracting, from the preset information collection, question data corresponding to preset response data of the response model in the response model library, where the question and response group data includes questioning data and response data corresponding to the questioning data;
performing a data preprocessing on the question and response group data and the question data, and adding the processed question and response group data and the processed question data to a model training corpus; and
periodically training the response model in the response model library through a multi-layer neural network based on data in the model training corpus.

Optionally, performing the data preprocessing on the question and response group data and the question data includes:
performing a word segmentation on the question and response group data and the question data, and converting, based on a preset text-to-value conversion rule, a phrase obtained through the word segmentation into a space vector.

Optionally, periodically training the response model in the response model library through the multi-layer neural network based on the data in the model training corpus includes:
periodically acquiring newly added data in the model training corpus, and randomly dividing the newly added data into training data, test data, and verification data according to a ratio; and
performing training, testing, and verification processes on the response model in the response model library through the multi-layer neural network based on the training data, the test data, and the verification data, respectively.

Optionally, determining and invoking the target response model in the response model library when receiving the conversation data sent by the client terminal includes:
when receiving the conversation data sent by the client terminal, determining a response field to which the conversation data belongs; and
determining and invoking, in the response model library, a target response model corresponding to the response field.

Optionally, generating the response message of the conversation data by using the target response model includes:
performing a data conversion on the conversation data to generate model input data;
selecting target questioning data, in preset questioning data provided by the target response model, that most closely matches the model input data; and
determining preset response data corresponding to the target questioning data as the response message of the conversation data.

Optionally, the method further includes:
if a matching degree of the target questioning data and the model input data is lower than a preset matching degree threshold, providing the conversation data to a preset human response port.

Optionally, after feeding back the response message to the client terminal, the method further includes:
if a human response request containing the conversation data, sent by the client terminal, is received, marking the conversation data and the response message as a to-be-evaluated conversation record.

In another aspect, an intelligent response device is provided. The device includes:
a training module that is configured to periodically train a response model in a response model library based on a response record and a preset information collection;
an invoking module that is configured to, when receiving conversation data sent by a client terminal, determine and invoke a target response model in the response model library; and
a feedback module that is configured to generate a response message for the conversation data by using the target response model, feed back the response message to the client terminal, and add the conversation data and the response message to the response record.

Optionally, the training module is specifically configured to:
periodically extract, from the response record, question and response group data, and extract, from the preset information collection, question data corresponding to preset response data of the response model in the response model library, where the question and response group data includes questioning data and response data corresponding to the questioning data;
perform a data preprocessing on the question and response group data and the question data, and add the processed question and response group data and the processed question data to a model training corpus; and
periodically train the response model in the response model library through a multi-layer neural network based on data in the model training corpus.

Optionally, the training module is specifically configured to:
perform a word segmentation on the question and response group data and the question data, and convert, based on a preset text-to-value conversion rule, a phrase obtained through the word segmentation into a space vector.

Optionally, the training module is specifically configured to:
periodically acquire newly added data in the model training corpus, and randomly divide the newly added data into training data, test data, and verification data according to a ratio; and
perform training, testing, and verification processes on the response model in the response model library through the multi-layer neural network based on the training data, the test data, and the verification data, respectively.

Optionally, the invoking module is specifically configured to:
when receiving the conversation data sent by the client terminal, determine a response field to which the conversation data belongs; and
determine and invoke, in the response model library, a target response model corresponding to the response field.

Optionally, the feedback module is specifically configured to:
perform a data conversion on the conversation data to generate model input data;
select target questioning data, in preset questioning data provided by the target response model, that most closely matches the model input data; and
determine preset response data corresponding to the target questioning data as the response message of the conversation data.

Optionally, the device further includes:
a human response module that is configured to, if a matching degree of the target questioning data and the model input data is lower than a preset matching degree threshold, provide the conversation data to a preset human response port.

Optionally, the device further includes:
a marking module that is configured to, if a human response request containing the conversation data, sent by the client terminal, is received, mark the conversation data and the response message as a to-be-evaluated conversation record.

In another aspect, an intelligent response device is provided. The intelligent response device includes a processor and a memory, where the memory stores at least one instruction, at least one program, a code set, or an instruction set that, when loaded and executed by the processor, implements the above described intelligent response methods.

In another aspect, a computer-readable storage medium is provided. The computer-readable storage medium stores at least one instruction, at least one program, a code set, or an instruction set that, when loaded and executed by a processor, implements the above described intelligent response methods.

The beneficial effects brought by the technical solutions provided by the embodiments of the present disclosure include:
In the embodiments of the present disclosure, a response model in the response model library is periodically trained according to the response record and a preset information collection; when conversation data sent by a client terminal is received, a target response model is determined in the response model library and invoked; a response message for the conversation data is generated by using the target response model, the response message is fed back to the client terminal, and the conversation data and the response message are added to the response record. In this way, the response record and the preset information collection are regularly sorted to train and optimize the response model. When there is a response request, the response model is automatically used for the intelligent response, and the response record is used as the training material of the response model as well, thereby accomplishing an intelligent response process that may learn independently and respond accurately without requiring too much human intervention.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of an intelligent response method according to some embodiments of the present disclosure;
FIG. 2 is a schematic diagram of complete processing of an intelligent response according to some embodiments of the present disclosure;
FIG. 3 is a schematic structural diagram of an intelligent response apparatus according to some embodiments of the present disclosure;
FIG. 4 is a schematic structural diagram of another intelligent response apparatus according to some embodiments of the present disclosure;
FIG. 5 is a schematic structural diagram of another intelligent response apparatus according to some embodiments of the present disclosure; and
FIG. 6 is a schematic structural diagram of an intelligent response device according to some embodiments of the present disclosure.

### DETAILED DESCRIPTION

To make the objective, technical solutions, and advantages of the present disclosure clearer, the implementations of the present disclosure will be made in detail hereinafter with reference to the accompanying drawings.

The embodiments of the present disclosure provide an intelligent response method. The execution entity of the method may be an intelligent response device. The intelligent response device may be a background server of any service provider, or an intelligent robot for conversation, or other devices with intelligent response capabilities. An intelligent response device may provide a response through a response model in the built-in response model library, where the response model may be optimized through continuous training. In addition, the intelligent response device is also provided with a human response function, which may complete part of a response task with human assistance when necessary. An intelligent response device may include a processor, a memory, and a transceiver. The processor may be configured to implement an intelligent response processing in the following process, and the memory may be configured to store data required and generated during the processing, such as a preset information collection, a response record. The transceiver may be configured to receive and transmit relevant data during the processing, such as receiving conversation data, feeding back a response message, and the like. In the disclosed embodiments, the intelligent response device is illustrated as an example of a background server of a service provider. The description for other situations will be similar, the details of which will be specifically provided when necessary.

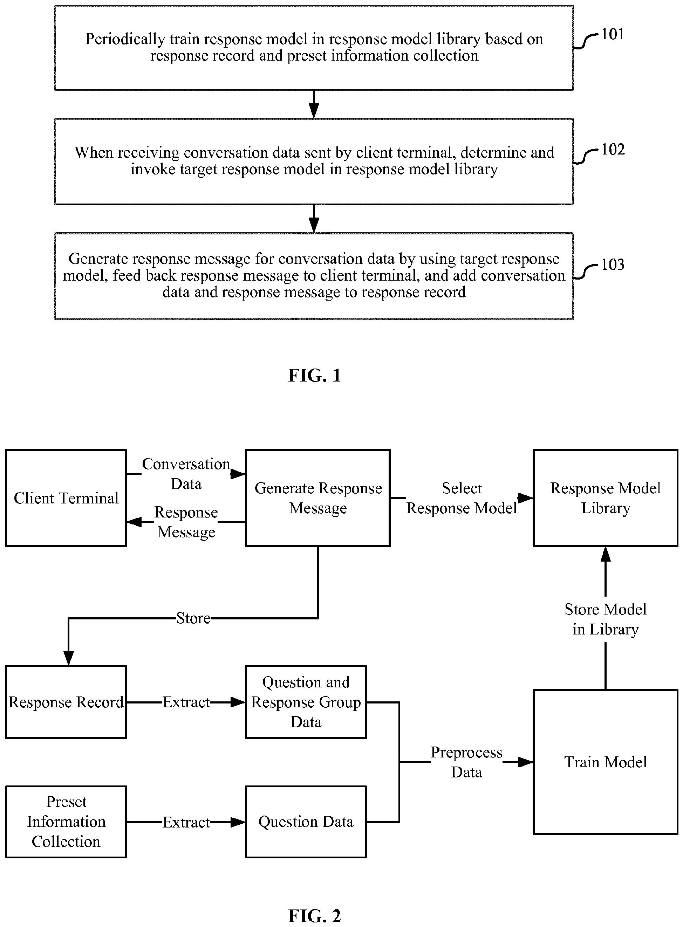

The flowchart shown in FIG. 1 will be described in detail hereinafter with reference to specific implementations. The content may be as follows:
Step 101: Periodically train a response model in a response model library according to a response record and a preset information collection.

In one implementation, a response model library may be set in an intelligent response device. The response model library may include a large number of response models for intelligent responses, where the response models may be configured to perform intelligent response tasks in different fields. The intelligent response device may periodically train the response models in the response model library according to the locally generated response record and the preset information collection, and continuously adjust and optimize the response rules of the response models through machine learning, so as to improve the accuracy and richness of the intelligent responses. The preset information collection here may be obtained by the intelligent response device through crawling and filtering information from the network according to a preset rule(s). The preset information collection may include data information in various formats, such as documents, pictures, videos, and the like.

Optionally, the process of training a response model in Step 101 may be specifically as follows: periodically extracting, from the response record, question and response group data, and extracting, from the preset information collection, question data corresponding to present response data of the response model in the response model library; performing a preprocessing on the question and response group data and the question data, and adding the processed question and response group data and the processed question data to a model training corpus; and periodically training, based on the data in the model training corpus, the response model in the response model library through a multi-layer neural network.

Here, the question and response group data includes the questioning data and the response data corresponding to the questioning data.

In one implementation, during the process of training a response model, the intelligent response device may periodically extract the question and response group data from the response record. The question and response group data may include the questioning data and the response data corresponding to the questioning data. Apparently, the questioning data includes the questions sent by users through the client terminals, while the response data includes the responses, to the questions, provided by the intelligent response device through the response models. At the same time, according to the preset response data of the response model in the response model library, the intelligent response device may also extract the corresponding question data from the preset information collection, where the preset response data may be the standard response data in the response model. A response model may feed back the same preset response data for questioning data in different forms. For example, for various forms of questioning data, such as "delivery time?", "when is it shipped?", "how long is the shipment?", a response model may all output preset response data of "delivery within 2 hours after ordering" as a feedback. Therefore, when using the preset information collection to train a response model, the intelligent response device may use preset response data of the response model as the standard, and merely extract different forms of question data corresponding to the preset response data.

Afterwards, the intelligent response device may perform a data preprocessing on the extracted question and response group data and question data, convert the format of these data into a format suitable for model training, and add the processed question and response group data and the processed question data to a model training corpus. Specifically, the intelligent response device may perform a word segmentation process on the question and response group data and the question data, divide a long sentence into multiple phrases, and then convert, based on a preset text-to-value conversion rule, the divided multiple phrases into space vectors suitable for model training. In this way, the intelligent response device may periodically use the data in the model training corpus to train a response model in the response model library through the multi-layer neural network, which, when combined with the current algorithmic language, allows a response model with semantic understanding, multi-round dialogue, and sentiment analysis functions to be obtained through the training. During the training process, the intelligent response device may periodically acquire, in the model training corpus, data newly added in the current cycle, and then randomly divide the newly added data into training data, test data, and verification data according to a certain ratio. Thereafter, the intelligent response device may perform training, testing, and verification processes on a response model in the response model library through the multi-layer neural network based on the training data, the test data, and the verification data, respectively, thereby accomplishing constant adjustment and optimization of parameters of the response model. It should be noted that the duration and the starting time point of a cycle for extracting the question and response group data and the question data and the duration and the starting time point of a cycle for training a response model may be the same or different.

Step 102: When receiving conversation data sent by a client terminal, determine and invoke a target response model in the response model library.

In one implementation, a user may install an intelligent response application on a client terminal, and perform an intelligent conversation with the intelligent response device through the installed intelligent response application. The client terminal may be any network device with a data exchange function, such as a computer, a mobile phone, a tablet, and the like. When the user initiates a conversation with the intelligent response device by using the client terminal, the intelligent response device may receive the conversation data sent by the client terminal. Afterwards, the intelligent response device may determine, in the locally set response model library, a target response model responsible for the conversation task, and invoke the target response model. It is to be understood that the response model library includes multiple response models, where each response model may be configured to execute intelligent response tasks in a different response field. Accordingly, after receiving the above-noted conversation data, the intelligent response device may first determine the response field to which the present intelligent response task belongs according to the conversation data, and then select and invoke, in the response model library, a response model corresponding to the response field.

Step 103: Generate a response message of the conversation data through the target response model, feed back the response message to the client terminal, and add the conversation data and the response message to the response record.

In one implementation, after the target response model is invoked, the intelligent response device may generate a response message for the conversation data by using the target response model, and then feed back the response message to the client terminal. At the same time, the intelligent response device may also add the conversation data sent by the client terminal and the above response message to the response record, to allow a response model in the response model library to be further trained later based on the content of the present conversation. It is to be noted that during the conversation of a client terminal with the intelligent response device, the conversation data and the response messages are often sent and fed back multiple times. Accordingly, in order to simplify the process of adding data to the response record, all the conversation data and response messages in a conversation session may be added to the response record concurrently. Therefore, it may be set that if there is no new conversation data received from a client terminal within a preset time period after feeding back a response message to the client terminal, the intelligent response device will add all the conversation data and response messages of the conversation session to the response record.

Optionally, the specific process of generating the response message by the intelligent response device through a response model may be as follows: performing a data conversion on the conversation data to generate model input data; selecting target questioning data, in the preset questioning data provided by the target response model, that most closely matches the model input data; and determining preset response data corresponding to the target questioning data as the response message of the conversation data.

In one implementation, after receiving the conversation data sent by the client terminal, the intelligent response device may perform a data conversion process on the conversation data to generate model input data. The data conversion process here may be a format conversion of the conversation data, that is, conversion to data recognizable by the response model, for instance, conversion to phrase vectors or word vectors. Afterwards, the intelligent response device may select the target questioning data, in the preset questioning data provided by the target response model, that most closely matches the model input data, and then determine the preset response data corresponding to the target questioning data as the response message of the conversation data. It should be noted that each response model may keep multiple items corresponding to "questions" and "responses". The "questions" are the above-noted preset questioning data, and the "responses" are the above-noted preset response data. One "question" only corresponds to one "response", while different "questions" may correspond to the same "response". When a "question" is input to a response model, the response model will automatically output a corresponding "response".

Optionally, when a response model is unable to accurately respond to the conversation data, the response may be manually provided. The corresponding process may be as follows: if a matching degree between the target questioning data and the model input data is lower than a preset matching degree threshold, providing the conversation data to a preset human response port.

In one implementation, at the moment of supporting the intelligent response through a response model, the intelligent response device also provides a means for a human response. Specifically, after the intelligent response device generates the model input data based on the conversation data, if the matching degrees between all the preset questioning data provided by the target response model and the model input data are found to be lower than a preset matching degree threshold (that is, the matching degree between the above target questioning data and the model input data is lower than the preset matching degree threshold), the conversation data may be provided to a preset human response port, to allow a human response process to be implemented for the conversation. Clearly, a user may also directly select the human response mode on the client terminal, so that after receiving the conversation data in the human response mode, the intelligent response device may directly provide the corresponding conversation data to the preset human response port. It is to be noted that the conversation data and response messages generated during the human response process may be also added to the response record for subsequent training of a response model.

Optionally, the accuracy of an intelligent response may be evaluated by way of subsequent conversations from the client terminal. Correspondingly, after Step 103, the following process may be performed: if a human response request containing the conversation data, sent by the client terminal, is received, marking the conversation data and the response message as a to-be-evaluated conversation record.

In one implementation, after the intelligent response device generates the response message through the target response model and feeds back the response message to the client terminal, if the response message cannot effectively solve the user's problem, the user has a high probability to request a human response. Accordingly, if the intelligent response device receives a human response request, sent by the client terminal, that includes the same conversation data, it may be determined that the response message fed back during the conversation fails to address the user's problem well, that is, the accuracy of the response message, generated by the response model for the currently received conversation data, is poor. Accordingly, the intelligent response device may mark the conversation data and the response message as a to-be-evaluated conversation record, to allow the subsequent human evaluation and correction of the to-be-evaluated conversation record(s). In addition, the intelligent response device may also delete the to-be-evaluated conversation record(s) from the locally stored response record, to prevent a response model with a large deviation to be obtained through the training based on the to-be-evaluated conversation record(s).

For ease of understanding, FIG. 2 schematically illustrates a flow of complete processing of an intelligent response according to some embodiments of the present disclosure. On one hand, a client terminal sends conversation data to an intelligent response device and the intelligent response device selects a response model from the response model library, generates and feeds back a response message, and keeps the response record. On the other hand, the intelligent response device extracts the question data from the preset information collection, extracts the question and response group data from the response record, performs a data preprocessing on the two types of data, trains a response model, and then stores the completely trained response model in the response model library.

In the embodiments of the present disclosure, a response model in the response model library is periodically trained according to the response record and a preset information collection; when conversation data sent by a client terminal is received, a target response model is determined in the response model library and invoked; a response message for the conversation data is generated by using the target response model, the response message is fed back to the client terminal, and the conversation data and the response message are added to the response record. In this way, the response record and the preset information collection are regularly sorted to train and optimize the response model. When there is a response request, the response model is automatically used for the intelligent response, and the response record is used as the training material of the response model as well, thereby accomplishing an intelligent response process that may learn independently and respond accurately without requiring too much human intervention.

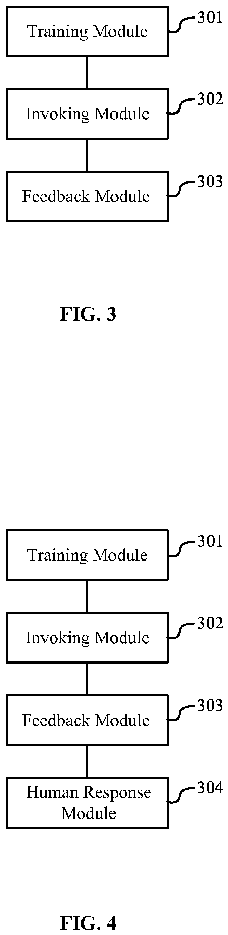

Based on the similar technical concept, the embodiments of the present disclosure further provide an intelligent response device. As shown in FIG. 3, the device includes:
a training module 301 that is configured to periodically train a response model in a response model library based on a response record and a preset information collection;
an invoking module 302 that is configured to, when receiving conversation data sent by a client terminal, determine and invoke a target response model in the response model library; and
a feedback module 303 that is configured to generate a response message for the conversation data by using the target response model, feed back the response message to the client terminal, and add the conversation data and the response message to the response record.

Optionally, the training module 301 is specifically configured to:
periodically extract, from the response record, question and response group data, and extract, from the preset information collection, question data corresponding to preset response data of the response model in the response model library, where the question and response group data includes questioning data and response data corresponding to the questioning data;
perform a data preprocessing on the question and response group data and the question data, and add the processed question and response group data and the processed question data to a model training corpus; and
periodically train the response model in the response model library through a multi-layer neural network based on data in the model training corpus.

Optionally, the training module 301 is specifically configured to:
perform a word segmentation on the question and response group data and the question data, and convert, based on a preset text-to-value conversion rule, a phrase obtained through the word segmentation into a space vector.

Optionally, the training module 301 is specifically configured to:
periodically acquire newly added data in the model training corpus, and randomly divide the newly added data into training data, test data, and verification data according to a ratio; and
perform training, testing, and verification processes on the response model in the response model library through the multi-layer neural network based on the training data, the test data, and the verification data, respectively.

Optionally, the invoking module 302 is specifically configured to:
when receiving the conversation data sent by the client terminal, determine a response field to which the conversation data belongs; and
determine and invoke, in the response model library, a target response model corresponding to the response field.

Optionally, the feedback module 303 is specifically configured to:
perform a data conversion on the conversation data to generate model input data;
select target questioning data, in preset questioning data provided by the target response model, that most closely matches the model input data; and
determine preset response data corresponding to the target questioning data as the response message of the conversation data.

Optionally, as shown in FIG. 4, the device further includes:
a human response module 304 that is configured to, if a matching degree of the target questioning data and the model input data is lower than a preset matching degree threshold, provide the conversation data to a preset human response port.

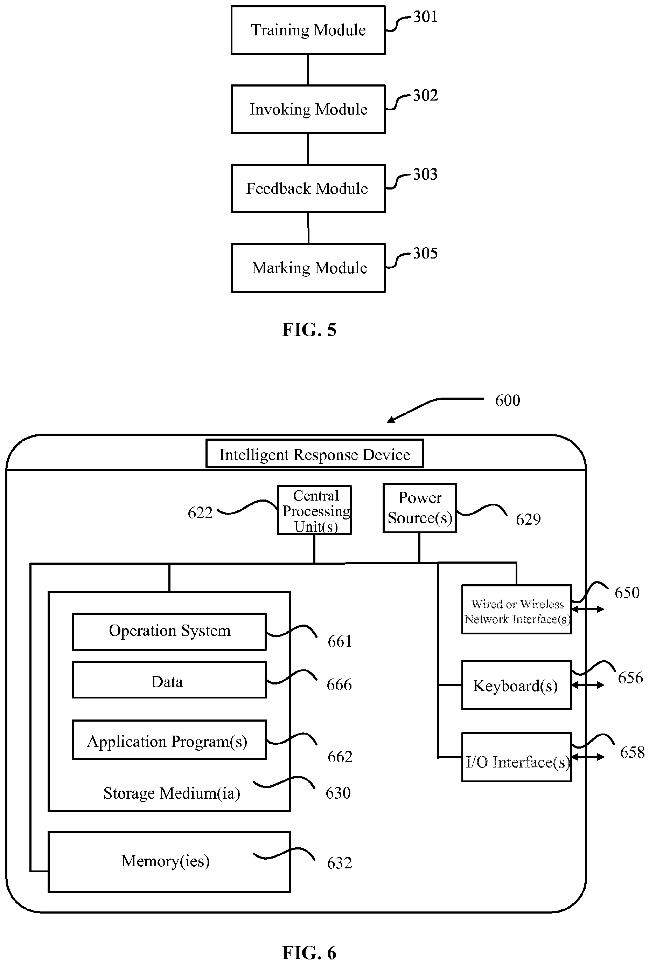

Optionally, as shown in FIG. 5, the device further includes:
a marking module 305 that is configured to, if a human response request containing the conversation data, sent by the client terminal, is received, mark the conversation data and the response message as a to-be-evaluated conversation record.

In the embodiments of the present disclosure, a response model in the response model library is periodically trained according to the response record and a preset information collection; when conversation data sent by a client terminal is received, a target response model is determined in the response model library and invoked; a response message for the conversation data is generated by using the target response model, the response message is fed back to the client terminal, and the conversation data and the response message are added to the response record. In this way, the response record and the preset information collection are regularly sorted to train and optimize the response model. When there is a response request, the response model is automatically used for the intelligent response, and the response record is used as the training material of the response model as well, thereby accomplishing an intelligent response process that may learn independently and respond accurately without requiring too much human intervention.

It should be noted that, in providing the intelligent response, an intelligent response device provided by the above embodiments is illustrated merely by way of example of the foregoing division of the functional modules. In real applications, the foregoing functions may be allocated into and implemented by different functional modules according to the needs. That is, the internal structure of the device may be divided into different functional modules to implement all or part of the above-described functions. In addition, the intelligent response devices and the intelligent response methods provided by the foregoing embodiments are attributed to the same concept. Accordingly, for the specific implementation process of the devices provided by the embodiments, the embodiments for the methods may be referred to, details of which will not be described again here.

FIG. 6 is a schematic structural diagram of an intelligent response device according to some embodiments of the present disclosure. The intelligent response device 600 may vary considerably depending on the configuration or performance, and may include one or more central processing units 622 (e.g., one or more processors) and memories 632, one or more storage media 630 (e.g., one or one mass storage devices) for storing application programs 662 or data 666. Here, the memories 632 and the storage media 630 may be a volatile storage device or a non-volatile storage device. The programs stored on the storage media 630 may include one or more modules (not shown), each of which may include a series of operating instructions for the cache server. Further, the central processing units 622 may be configured to communicate with the storage media 630, and execute, on the intelligent response device 600, a series of operating instructions stored in the storage media 630.

The intelligent response device 600 may further include one or more power sources 629, one or more wired or wireless network interfaces 650, one or more input and output interfaces 658, one or more keyboards 656, and/or one or more operating systems 661, such as Windows Server™, Mac OS X™, Unix™, Linux™, FreeBSD™, and the like.

The intelligent response device 600 may include a memory and one or more programs, where the one or more programs are stored in the memory and configured to be executed by one or more processors. The one or more programs include instructions that are configured to implement the intelligent response as described above.

A person skilled in the art may understand that all or part of the steps of the above embodiments may take the form of hardware implementation or the form of implementation of programs for instructing relevant hardware. The programs may be stored in a computer-readable storage medium. The storage medium may be a read-only memory, a magnetic disk, or an optical disk, etc.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

## Claims

1. An intelligent response method, comprising:
periodically training a response model in a response model library based on a response record and a preset information collection;
when receiving conversation data sent by a client terminal, determining and invoking a target response model in the response model library; and
generating a response message for the conversation data by using the target response model, feeding back the response message to the client terminal, and adding the conversation data and the response message to the response record.

2. The method according to claim 1, wherein periodically training the response model in the response model library based on the response record and the preset information collection further includes:
periodically extracting, from the response record, question and response group data, and extracting, from the preset information collection, question data corresponding to preset response data of the response model in the response model library, wherein the question and response group data includes questioning data and response data corresponding to the questioning data;
performing a data preprocessing on the question and response group data and the question data, and adding the processed question and response group data and the processed question data to a model training corpus; and
periodically training the response model in the response model library through a multi-layer neural network based on data in the model training corpus.

3. The method according to claim 2, wherein performing the data preprocessing on the question and response group data and the question data further includes:
performing a word segmentation on the question and response group data and the question data, and converting, based on a preset text-to-value conversion rule, a phrase obtained through the word segmentation into a space vector.

4. The method according to claim 2, wherein periodically training the response model in the response model library through the multi-layer neural network based on the data in the model training corpus further includes:
periodically acquiring newly added data in the model training corpus, and randomly dividing the newly added data into training data, test data, and verification data according to a ratio; and
performing training, testing, and verification processes on the response model in the response model library through the multi-layer neural network based on the training data, the test data, and the verification data, respectively.

5. The method according to claim 1, wherein determining and invoking the target response model in the response model library when receiving the conversation data sent by the client terminal further includes:
when receiving the conversation data sent by the client terminal, determining a response field to which the conversation data belongs; and
determining and invoking, in the response model library, a target response model corresponding to the response field.

6. The method according to claim 1, wherein generating the response message of the conversation data by using the target response model further includes:
performing a data conversion on the conversation data to generate model input data;
selecting target questioning data, in preset questioning data provided by the target response model, that most closely matches the model input data; and
determining preset response data corresponding to the target questioning data as the response message of the conversation data.

7. The method according to claim 6, further comprising:
if a matching degree of the target questioning data and the model input data is lower than a preset matching degree threshold, providing the conversation data to a preset human response port.

8. The method according to claim 1, after feeding back the response message to the client terminal, the method further includes:
if a human response request containing the conversation data, sent by the client terminal, is received, marking the conversation data and the response message as a to-be-evaluated conversation record.

9. An intelligent response device, comprising:
a training module that is configured to periodically train a response model in a response model library based on a response record and a preset information collection;
an invoking module that is configured to, when receiving conversation data sent by a client terminal, determine and invoke a target response model in the response model library; and
a feedback module that is configured to generate a response message for the conversation data by using the target response model, feed back the response message to the client terminal, and add the conversation data and the response message to the response record.

10. The device according to claim 9, wherein the training module is further configured to:
periodically extract, from the response record, question and response group data, and extract, from the preset information collection, question data corresponding to preset response data of the response model in the response model library, wherein the question and response group data includes questioning data and response data corresponding to the questioning data;
perform a data preprocessing on the question and response group data and the question data, and add the processed question and response group data and the processed question data to a model training corpus; and
periodically train the response model in the response model library through a multi-layer neural network based on data in the model training corpus.

11. The device according to claim 10, wherein the training module is further configured to:
perform a word segmentation on the question and response group data and the question data, and convert, based on a preset text-to-value conversion rule, a phrase obtained through the word segmentation into a space vector.

12. The device according to claim 10, wherein the training module is further configured to:
periodically acquire newly added data in the model training corpus, and randomly divide the newly added data into training data, test data, and verification data according to a ratio; and
perform training, testing, and verification processes on the response model in the response model library through the multi-layer neural network based on the training data, the test data, and the verification data, respectively.

13. The device according to claim 9, wherein the invoking module is further configured to:
when receiving the conversation data sent by the client terminal, determine a response field to which the conversation data belongs; and
determine and invoke, in the response model library, a target response model corresponding to the response field.

14. The device according to claim 9, wherein the feedback module is further configured to:
perform a data conversion on the conversation data to generate model input data;
select target questioning data, in preset questioning data provided by the target response model, that most closely matches the model input data; and
determine preset response data corresponding to the target questioning data as the response message of the conversation data.

15. The device according to claim 14, further comprising:
a human response module that is configured to, if a matching degree of the target questioning data and the model input data is lower than a preset matching degree threshold, provide the conversation data to a preset human response port.

16. The device according to claim 9, further comprising:
a marking module that is configured to, if a human response request containing the conversation data, sent by the client terminal, is received, mark the conversation data and the response message as a to-be-evaluated conversation record.

17. An intelligent response device, comprising a processor and a memory, wherein the memory stores at least one instruction, at least one program, a code set, or an instruction set that, when loaded and executed by the processor, implements the intelligent response method according to any one of claims 1-8.

18. A computer-readable storage medium, the computer-readable storage medium storing at least one instruction, at least one program, a code set, or an instruction set that, when loaded and executed by a processor, implements the intelligent response method according to any one of claims 1-8.
